# EUROPEAN PATENT SPECIFICATION

(11) **EP 1 589 276 B1**
(45) Date of publication and mention of the grant of the patent: **02.05.2007**
(21) Application number: 05380079.3
(22) Date of filing: 19.04.2005
(51) Int. Cl.: F16M 5/00, E04B 5/02, E04B 5/06, E04B 5/08

(54) **Device for the construction of bases**
Einrichtung zur Untergestellherstellung
Dispositif pour la construction de bases

(30) Priority: 20.04.2004 ES 200400928 U
(43) Date of publication of application: 26.10.2005
(73) Proprietor: Jackson Colomer, Ines, 08010 Barcelona (ES)
(72) Inventor: Jackson Colomer, Ines, 08010 Barcelona (ES)
(74) Representative: Torras Toll, Jorge

(56) References cited:
- EP-A- 0 924 360
- DE-A1- 3 634 568
- ES-U1- 1 055 051
- FR-A- 2 349 004
- FR-A- 2 712 013

## Description

### DESCRIPTION OF THE INVENTION

The subject of this invention, as is expressed in the heading of this descriptive memorandum, consists in a **Device for the construction of bases**, usable in the assembly of bases of the seating for machinery and for floating floors, with the special feature that these bases can be dismantled and reused in a different location.

Utility model No ES1055051 U is known, the subject of which is a device for the construction of bases basically consisting in a modular assembly composed of two elements, a slab of concrete, iron or other suitable material and a slab union element, enabling a modular base to be created which can be dismantled so that when the machine has to be removed or its location changed, the base can be dismantled and reassembled in another place, its form being able to be changed, reduced or extended.

In this model the slab union element consists of two plates, one lower and the other upper, both preferably of a polygonal shape. The lower has at least two tubular extensions internally threaded, fixed perpendicularly to that plate while the upper has perforations vertically matching the tubular extensions of the lower plate; bolts are introduced vertically into these perforations and screwed into the tubular extensions of the lower plate, slab-lower plate-upper plate assembly being in this way made solid and stabilised.

This form of assembly basically presents two drawbacks: To introduce the tubular extensions of the lower plate into the slab, the slab has to be partially lifted and this represents an added difficulty, particularly if this slab is already attached to another or others, as the weight of these slabs could be substantial.

In the case that the substratum on which the base rests is not level, the base will also not be level, or auxiliary elements would have to be used to level it up.

The device described in this memorandum represents a notable improvement with regard to the two drawbacks mentioned above.

The invention consists in a modular assembly composed of two elements, a slab of concrete or other suitable material and a slab union element, enabling a modular base to be created which can be dismantled and reused should it have to be removed or the placing of the base changed.

The slab union element is formed by two plates, one lower, and the other upper, of which the lower has a minimum of two perforations, both with suitable threading to receive a bolt passing through for its fixing to the upper plate. The threading can be made in the body of the plate itself or can be in two nuts applied to the lower face of that plate, and preferably secured by welding or any other similar method. In this way it is not necessary for the slab to be partially lifted in order to place the lower plate.

The upper plate is formed by two parts fitted together with a dovetail joint. This means that one upper part can be placed first and bolted to the lower plate and then, if necessary, the second upper part can be fitted to the first and in its turn bolted through the corresponding perforation in the lower plate.

Another improvement in the new device consists in the fact that one of the bolts can be replaced by a headless bolt, of variable length, which passes through the whole assembly, supporting its lower end on a foot of flexible material such as rubber or similar, which allows the height of the base on the substratum to be adjusted and therefore enables the base to be levelled although the substratum on which it rests is not. This foot will be protected by a metal plate with a recess in which the bolt will be supported.

To fix the upper plate in these cases a nut is used which will be adjusted over the upper plate, removing the surplus upper portion of the stud by cutting with a radial saw or equivalent process.

The slabs constituting the base are preferably polygonal in shape, with at least one area of seating for the union element in each of its sides, distributed on both the upper face and the lower face, where the respective two parts of the upper plate and the lower plate are coupled.

These seating areas are formed by recesses in the corresponding surfaces of the slab, which in the case of the upper ones are of equal or greater depth than the thickness of the upper plate of the union element plus the thickness of the head of the bolt or the nut, while for the lower ones this recess has a minimum depth of the thickness of the lower plate.

In turn, each seating area has a perforation through it to match the perforation in the corresponding part of the upper plate of the union element and the corresponding perforation in the lower plate. These perforations have sufficient diameter for the insertion in them of the bolts or threaded studs and will all be lined up at the precise moment that the bolt or stud is introduced. The lower plate, the slab and the corresponding part of the upper plate will become solidly assembled at the moment that the lower nut is screwed tight.

The method of operating the assembly of the bases is very simple: the slabs must be attached two by two using the union element. To do this the lower plate is slipped horizontally below the slab along the corresponding seating until one of its perforations is lined up with the perforation in the slab. Then one of the two parts forming the upper plate is placed in the upper seating of one of the two slabs, in such a way that its perforation is also lined up with the perforation in the slab. Then a bolt is passed through the lined up perforations and screwed to the nut located below the lower plate and fixed to it. Finally, the second of the two parts forming the upper plate and dovetailed to the first is fitted in the upper seating of the other slab, after which it is screwed down by the bolt or stud to the nut located under the lower plate, thus making the whole assembly solid. If in place of bolts or studs of a fixed length, in at least one of the two perforations a stud of variable length is used, supported on a foot of flexible material (preferably protected by a metal plate with a recess into which the stud can fit), the height of the base over the substratum can be adjusted to ensure that the base is levelled; the surplus stud being cut off level with the upper surface of the slab. The main purpose of the foot of flexible material (rubber or similar) is to act as an absorbent material for the vibrations and shocks that the machine placed on the base may produce. These feet can be replaced by continuous plates with mechanical characteristics giving the same levelling and shock-absorbing effect.

### DESCRIPTION OF THE DRAWINGS

For the purpose of illustrating what has been set out above, attached to this descriptive memorandum and forming an integral part of it, as an example of carrying out the possible practical applications of the invention but not limiting, are four figures showing different views of the invention the subject of this memorandum.

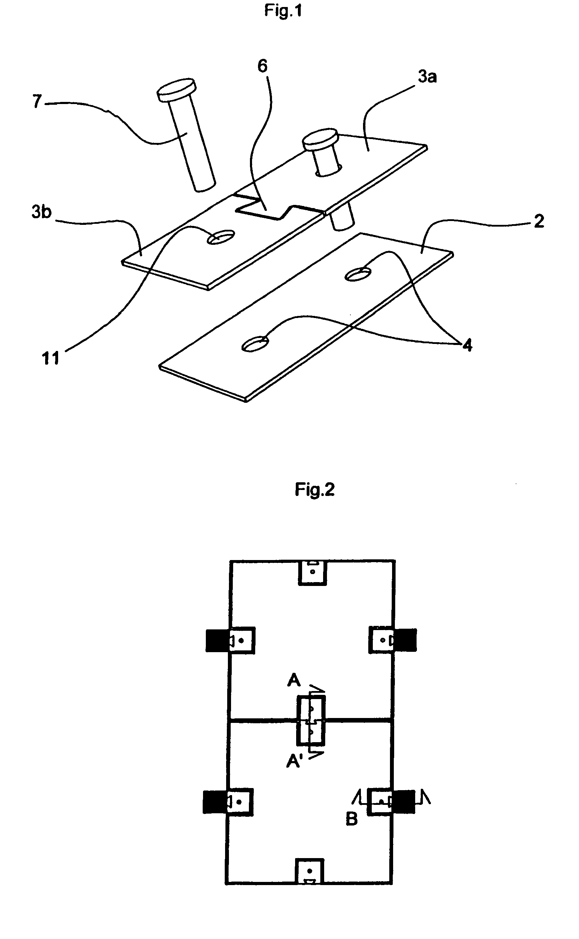

Fig. 1 shows a detail of the dovetail joint with which the two pieces forming the upper plate of the union element are united.
Fig. 2 is a view from above of the union of two slabs.

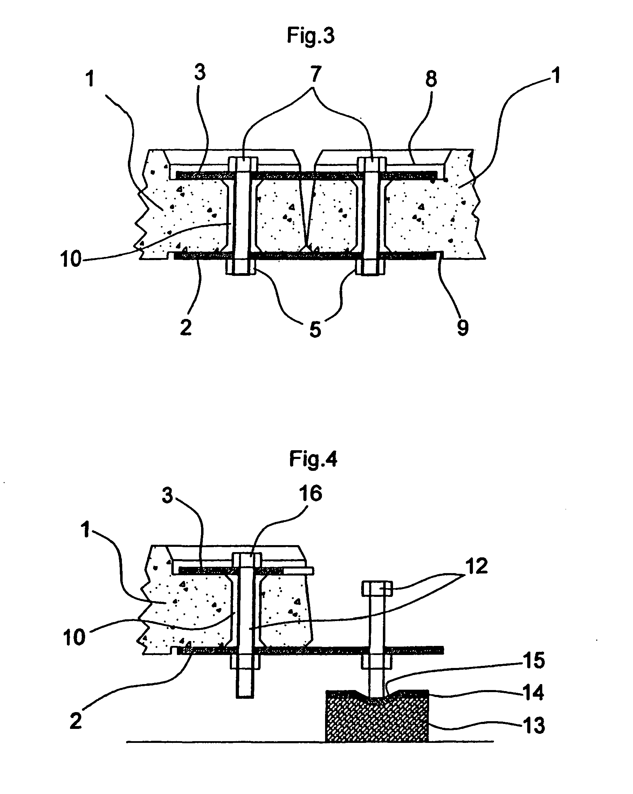

Fig. 3 corresponds to section A-A' of fig. 2, showing in detail the profile of the union element between two slabs, on the basis of bolts with polygonal heads.
Fig. 4 corresponds to section B-B' of fig.2, showing in detail the profile of the union element between two slabs on the basis of a bolt with a polygonal head and a threaded stud of variable length resting on foot of flexible material.

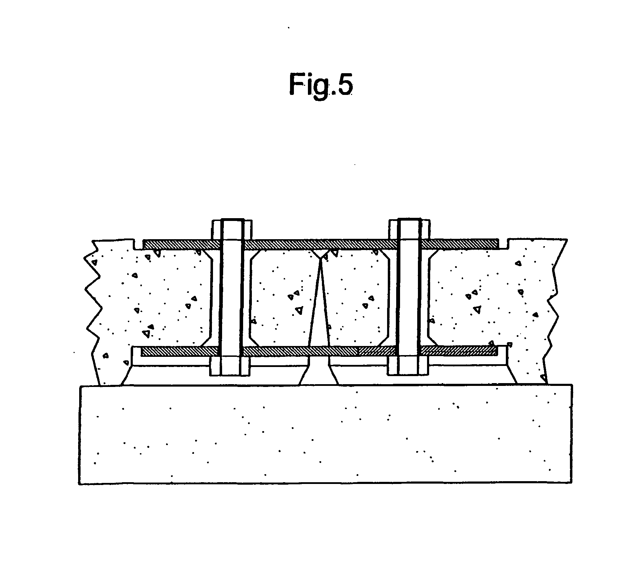

Fig. 5 corresponds to a section equivalent to the A-A' of Fig. 2, but showing the device as being supported on continuous elastic slabs. In this case the slabs are mounted reversed.

### DESCRIPTION OF A PRACTICAL CASE

The novel device for the construction of bases is composed of two elements, a concrete slab (1) and a slab union element formed by two plates, a lower (2), and an upper (3).
The lower plate (2) has two perforations (4) under which and resting against the lower face are two nuts (5) fixed by welding.

The upper plate (3) is formed by two parts (3a) and (3b) united by a dovetail joint (6), and fixed solidly to the lower plate (2) by two bolts (7). Each of these parts (3a) and (3b) has a perforation (11) made to match the perforations (4) in the lower plate (2).

The slabs (1) have on each of their sides an upper seating area (8) for the upper plate (3), and a lower seating area (9) for the lower plate (2).

These seating areas (8) and (9) are formed by a recess in the corresponding surfaces of the slab (1), which in the case of the upper ones (8) is of a depth equal to the thickness of the upper plate (3) of the union element plus the thickness of the head of the bolt (7), while in the lower ones the depth of the recess corresponds to the thickness of the lower plate (2).

In turn, each seating area has a perforation through it (10) matching the perforations (4) and (11) of the union element.

Alternatively, the screws (7) are replaced by a headless threaded stud (12), which passes through the whole assembly, resting its lower end on a foot of flexible material (13) fitted with a metal plate (14) with a recess (15) in which the stud rests, while a nut (16) is fitted to its upper end which is adjusted on the upper plate (3).

By altering the position of this threaded stud (12) the height of the base can be adjusted over the substratum in order to level it, correcting irregularities in the substratum.

The materials used in manufacturing the components forming the union element for concrete bases are independent of the subject of this invention, as well as the forms, dimensions and accessories that may be used, being able to be replaced by others which are technically equivalent.

Having established the concept expressed, hereunder is set out the note of claims, thus summarising the novelties which it is wished to claim.

## Claims

1. Device for the construction of bases of the type composed of two elements, concrete slabs (1) and slab union elements, formed by two plates, one lower (2) and another upper (3), **characterised in that** the lower plate (2) has at least two perforations (4) both with threads suitable to receive a bolt (7) or stud for their fixing to the upper plate (3), which is formed by two parts (3a-3b) united by a dovetail joint (6), each with a perforation (11) to match those of the lower plate (2).

2. Device for the construction of bases according to the above claim, **characterised in that** the thread of the lower plate (2) of the slab union elements is made in the body of the plate itself and/or is constituted by respective nuts (5), supported coaxially with the perforations (4), on the lower face of this plate (2), secured to it by welding or other similar method.

3. Device for the construction of bases according to one of the above claims, **characterised in that** in the cases in which the slab union elements are joined by a threaded stud (12), the lower end of this is adapted to be seated on a foot of material (13) reinforced by a metal plate (14) with a recess (15) where the stud can rest, and the upper end can receive a nut which can be adjusted on the upper plate.

## Patentansprüche

1. Gerät zur Herstellung von Fundamenten von der Art, die aus zwei Elementen bestehen, Betonplatten (1) und Platten-Verbindungselementen, die mittels zweier Platten gebildet werden, einer unteren (2) und einer oberen (3), **dadurch gekennzeichnet, dass** die untere Platte (2) wenigstens 2 Bohrungen (4) besitzt, die beide über Gewinde verfügen und die dazu ausgelegt sind, Bolzen (7) oder Ansatzbolzen zur Befestigung der oberen Platte (3) aufzunehmen, die aus zwei mittels einer Zinkenverbindung (6) verbundenen Teilen (3a, 3b) gebildet ist, die jeweils über eine Bohrung (11) verfügen, die mit der der unteren Platte (2) übereinstimmt.

2. Gerät zur Herstellung von Fundamenten nach dem obigen Anspruch, **dadurch gekennzeichnet, dass** das Gewinde der unteren Platte (2) der Platten-Verbindungselemente im Körper der Platte selbst und/oder mittels entsprechender Gewindemütter (5) gebildet wird, die koaxial durch die Bohrungen (4) auf der unteren Seite dieser Platte (2) gestützt werden und auf dieser durch Schweißen oder einer anderen ähnlichen Methode gesichert sind.

3. Gerät zur Herstellung von Fundamenten nach einem der obigen Ansprüche, **dadurch gekennzeichnet, dass** in den Fällen, in denen die Platten-Verbindungselemente durch einen Ansatzbolzen mit Gewinde (12) verbunden sind, das untere Ende desselben so ausgelegt ist, auf einem Sockel aus Material (13) gelagert zu werden, das mittels einer Metallplatte (14) mit einer Vertiefung (15) verstärkt wird, in der der Ansatzbolzen gelagert werden kann, und das obere Ende eine Gewindemutter aufnehmen kann, die auf der oberen Platte justiert werden kann.

## Revendications

1. Dispositif pour la construction de bases du type composé de deux éléments, des dalles de béton (1) et des éléments de couplage de dalles, formé de deux plaques, l'une inférieure (2) et l'autre supérieure (3), **caractérisé en ce que** la plaque inférieure (2) possède au moins deux perforations (4) toutes deux avec des filetages adaptés pour recevoir un boulon (7) ou un goujon pour leur fixation à la plaque supérieure (3), qui est constituée de deux parties (3a, 3b) couplées par un assemblage à tenon (6), chacune avec une perforation (11) pour correspondre à celles de la plaque inférieure (2).

2. Dispositif pour la construction de bases selon la revendication ci-dessus, **caractérisé en ce que** le filetage de la plaque inférieure (2) des éléments de couplage de dalles est réalisé dans le corps de la plaque elle-même et/ou est constitué par des écrous (5) respectifs, soutenu coaxialement avec les perforations (4) sur la face inférieure de cette plaque (2), fixé à elle par soudure ou autre méthode similaire.

3. Dispositif pour la construction de bases selon l'une des revendications ci-dessus, **caractérisé en ce que** dans les cas où les éléments de couplage de dalles sont joints par un goujon fileté (12), l'extrémité inférieure de celui-ci est adaptée pour être assemblée sur un socle de matériau (13) renforcé par une plaque de métal (14) avec une cavité (15) dans laquelle le goujon peut prendre appui, et l'extrémité supérieure peut recevoir un écrou qui peut être ajusté sur la plaque supérieure.
